# EUROPEAN PATENT APPLICATION

(11) **EP 4 663 268 A1**
(43) Date of publication of application: **17.12.2025**
(21) Application number: 23715895.1
(22) Date of filing: 06.02.2023
(51) Int. Cl.: B01D 25/176

(54) **FILTER FABRIC FOR FILTRATION PLATES**

(71) Applicant: Filtros Industriales, S.L., 08223 Terrasssa (Barcelona) (ES)
(72) Inventor: NOMEN GALOFRE, Nicolas, 08223 TERRASSSA (Barcelona) (ES); ALCALA ALVAREZ, Daniel, 08223 TERRASSSA (Barcelona) (ES); BERBET DE PAULA, Maria Eduarda, 08223 TERRASSSA (Barcelona) (ES)
(74) Representative: Herrero & Asociados, S.L.
(86) International application number: PCT/ES2023/070062
(87) International publication number: WO 2024/165768

(57) **Abstract**

The filter fabric (1) for filtration plates comprises a central portion (5) and a plurality of fixing projections (2) extending from said central portion (5), said central portion (5) comprising slots (4) for the insertion of the plurality of fixing projections (2).

It allows to provide a filter fabric that speeds up the operation of placing and replacing the filter fabric on a filtration plate, without the need to use separate filter fabric fasteners.

## Description

### Object of the invention

The present invention relates to a filter fabric for filtration plates, which is fixed on a filtration plate.

### Background to the invention

Filter fabrics are used in filtration plates for e.g., sludge or industrial water treatment in order to achieve efficient removal of existing contaminants, to dewater the sludge and to separate the liquid (filtrate) from the solid (cake).

Filtration is carried out by pressure and a series of plates and frames alternated by a filter fabric on each side of the plate. These filter fabrics are removed after filtration and collected for recycling. They are removed at the end of their useful life and are generally discarded and not recycled.

For the placement of the filter fabrics, fastening devices such as flanges, hooks or Velcro^{®} are usually used, which hold the filter fabric on the filtration plate through eyelets.

Obviously, the use of such fixing devices increases the cost of installing filter fabrics. It also makes the installation and removal process time-consuming.

### Description of the invention

Therefore, an objective of the present invention is to provide a filter fabric that streamlines the operation of placing and replacing said filter fabric on a filtration plate, without the need to use separate fixing elements of the filter fabric.

With the filter fabric of the invention, the aforementioned disadvantages are solved, presenting other advantages that will be described below.

The filter fabric in accordance with the present invention is described in claim 1, and the dependent claims include additional features that are optional.

In particular, the filter fabric for filtration plates comprises a central portion and a plurality of fixing projections extending from said central portion, said central portion comprising slots for the insertion of the plurality of fixing projections.

Preferably, the central portion and the plurality of fixing projections are of one piece.

According to a preferred embodiment, each of said fixing projections comprises a plurality of teeth, for example, of triangular shape.

Furthermore, the central portion is preferably square or rectangular in shape, and the fixing projections extend from two contiguous sides of the central portion, while the slots are arranged on the other two sides of the central portion.

The filter fabric according to the present invention does not require external fasteners and is therefore more economical to use than conventional filter fabrics, which require these fasteners. Thus, you have a more recyclable and sustainable product, as well as a faster installation time.

In addition, the use of a laser machine to cut the fastening projections to the right shape reduces production time and costs.

By manufacturing the fabric without additional elements such as metal eyelets, the fabric will consist entirely of the same synthetic material and will therefore be easier to recycle. For example, if the filter fabric and collar are made of polypropylene, the filter fabric will be 100% polypropylene and therefore recyclable rather than disposable.

### Brief description of the drawings

For a better understanding of what has been explained above, some drawings are included in which, schematically and only by way of a non-limiting example, a practical case of embodiment is shown.
Figure 1 is a plan view of a filter fabric in accordance with the present invention;
Figure 2 is a perspective view of a filter fabric in accordance with the present invention placed over a filtration plate; and
Figure 3 is an enlarged perspective view showing the detail of the insertion of the fixing projections into the corresponding slots to fix the filter fabric to the filtration plate.

### Description of a preferred embodiment

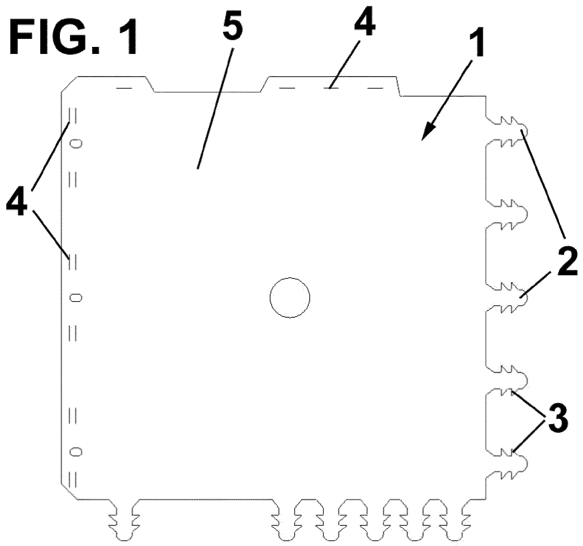

Figure 1 shows a filter fabric in accordance with the present invention, generally identified by reference number 1.

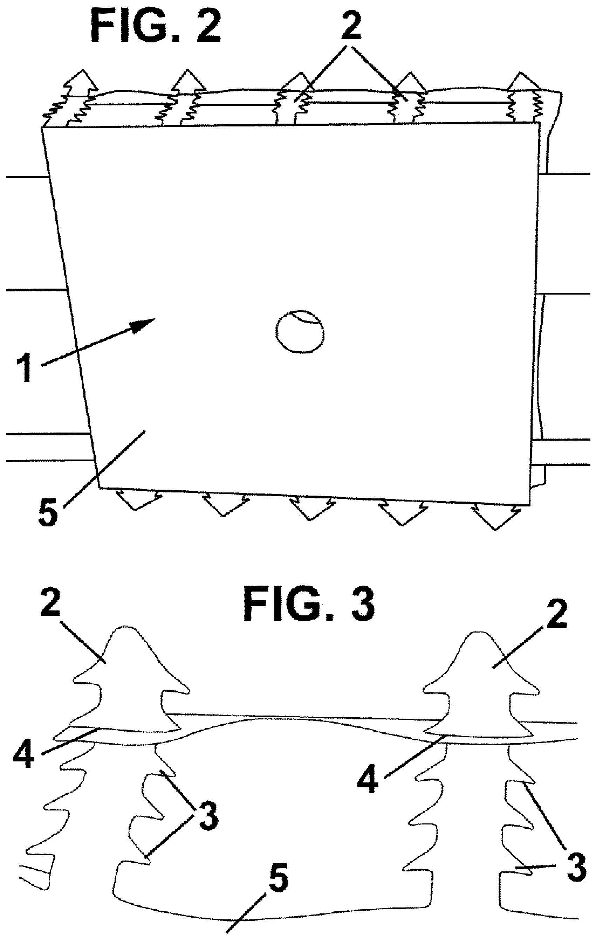

This filter fabric 1 comprises a central portion 5, for example, of a square or rectangular shape, and a plurality of fixing projections 2 extending from said central portion 5. Furthermore, said central portion 5 comprises slots 4 for the insertion of the plurality of fixing projections 2 in its position of use, i.e., when fixed on a filtration plate, as shown in figure 2.

As can be seen in figure 1, the central portion 5 and the plurality of fixing projections 2 are of one piece, i.e., the fixing projections 2 are an extension of the central portion 5, not added elements. For example, the fixing projections 2 and the central portion 5 are formed by cutting a larger sheet of filter material using a laser machine.

In order to prevent accidental removal of the fixing projections 2 from their corresponding slot 4, each of said fixing projections 2 comprises a plurality of teeth 3, for example of triangular shape, in particular, in the form of a ratchet, which facilitates the insertion of the fixing projection 2 into the slot 4 but hinders its removal.

According to the embodiment shown in figure 1, the fixing projections 2 extend from two contiguous sides of the central portion 5, which has a square shape, while the slots 4 are arranged on the other two sides of the central portion 5.

However, it should be noted that the fixing projections 2 may be located around the central portion 5 in any suitable position, for example, on the entire length of the sides of the central portion 5 or on only a portion of the sides of the central portion 5, as can be seen in said figure 1.

In order to fix the filter fabric 1 according to the present invention on a filtration plate it is simply necessary to insert all or some of the fixing projections 2 into their corresponding slots 4.

As each fixing projection 2 comprises a plurality of teeth 3, the distal end of the fixing projection 2 can be stretched until the filter fabric 1 is snug against the filtration plate, so that one of the teeth 3 will be in contact with the edges of the slot 4, as can be seen in figure 3.

Thanks to the plurality of teeth 3 on each fixing projection 2, the filter fabric according to the present invention of a given size can be used for fixing to different filtration plates with different dimensions.

Although reference has been made to a specific embodiment of the invention, it is obvious to a person skilled in the art that the filter fabric described is susceptible to numerous variations and modifications, and that all the details mentioned can be replaced by technically equivalent ones, without departing from the scope of protection defined by the appended claims.

## Claims

1. Filter fabric (1) for filtration plates, **characterized in that** it comprises a central portion (5) and a plurality of fixing projections (2) extending from said central portion (5), said central portion (5) comprising slots (4) for the insertion of the plurality of fixing projections (2).

2. Filter fabric (1) for filtration plates according to claim 1, wherein the central portion (5) and the plurality of fixing projections (2) are of one piece.

3. Filter fabric (1) for filtration plates according to claim 1 or 2, wherein each of said fixing projections (2) comprises a plurality of teeth (3).

4. Filter fabric (1) for filtration plates according to claim 3, wherein the teeth (3) have a triangular shape.

5. Filter fabric (1) for filtration plates according to any one of the preceding claims, wherein the central portion (5) is square or rectangular in shape, and the fixing projections (2) extend from two contiguous sides of the central portion (5).

6. Filter fabric (1) for filtration plates according to claim 5, wherein the slots (4) are arranged on the other two sides of the central portion (5).
